# EUROPÄISCHE PATENTSCHRIFT

(11) **EP 3 003 955 B1**
(45) Veröffentlichungstag und Bekanntmachung des Hinweises auf die Patenterteilung: **15.02.2017**
(21) Anmeldenummer: 14708827.2
(22) Anmeldetag: 27.02.2014
(51) Int. Cl.: B66C 23/84, E04G 21/04

(54) **ARBEITSGERÄT MIT AN EINEM DREHKOPF ANGEORDNETEM ARBEITSAUSLEGER**
WORKING DEVICE WITH A WORKING BOOM ARRANGED ON A ROTARY HEAD
ENGIN DE TRAVAIL À FLÈCHE DE TRAVAIL DISPOSÉE SUR UNE TÊTE ROTATIVE

(30) Priorität: 28.05.2013 DE 102013209878
(43) Veröffentlichungstag der Anmeldung: 13.04.2016
(73) Patentinhaber: Putzmeister Engineering GmbH, 72631 Aichtal (DE)
(72) Erfinder: WESTERMANN, Karl, 72141 Walddorfhäslach (DE)
(74) Vertreter: Wolf, Eckhard
(86) Internationale Anmeldenummer: PCT/EP2014/053778
(87) Internationale Veröffentlichungsnummer: WO 2014/191125

(56) Entgegenhaltungen:
- DE-A1-102008 007 917
- GB-A- 2 087 816
- GB-A- 2 417 478
- JP-A- H11 117 342
- JP-U- S63 151 551
- US-A- 5 158 420

## Beschreibung

Die Erfindung betrifft ein Arbeitsgerät mit einem Unterbau zur Aufnahme einer Abstützvorrichtung und mit einem langgestreckten Arbeitsausleger, wobei der Arbeitsausleger mit seinem einen Ende an einem über den Unterbau überstehenden Lagerbock eines Drehkopfs um eine Horizontalachse schwenkbar gelagert ist, wobei der Drehkopf mittels eines radial überstehenden Lagerrings an einem Drehlager des Unterbaus um eine Hochachse drehbar gelagert ist, wobei der Lagerbock und der Lagerring des Drehkopfs über eine mit einem zentralen Durchbruch versehene Grundplatte starr miteinander verbunden sind, und wobei der Lagerbock eine in der Längsrichtung des Arbeitsauslegers sich im Wesentlichen über den Innendurchmesser des Lagerrings erstreckende und quer dazu schmalere Tragstruktur bildet. Arbeitsgeräte dieser Art, die beispielsweise als Autobetonpumpen ausgebildet sind, sind bekannt (DE-100 32 622 A1). Der Unterbau hat dort die Aufgabe, das Gewicht und das Lastmoment des Arbeitsauslegers über die Abstützvorrichtung in den Untergrund einzuleiten. Im Falle einer Betonpumpe ist der Arbeitsausleger als Verteilermast ausgebildet, der als Träger für eine Betonförderleitung dient. Über die Betonförderleitung wird Flüssigbeton, der während des Betonierens fortlaufend in einen Materialaufgabebehälter eingebracht wird, zu einer vom Standort des Fahrzeugs entfernt angeordneten Betonierstelle gefördert. Üblicherweise umfasst die Abstützvorrichtung vier am Unterbau angelenkte Stützbeine, die über Hydraulikzylinder auf dem Untergrund abgestützt werden können. Der Drehkopf eines solchen Arbeitsgeräts trägt an seinem oberen Ende über ein horizontales Gelenk den Arbeitsausleger, und ist an seinem unteren Ende über das Drehlager mit dem Unterbau drehbar verbunden. Das Drehlager ist ein hochbelastetes Bauteil, das die Lasten des Auslegers aufnehmen und an die Stützbeine weiterleiten muss. Üblicherweise ist der als Lagerbock ausgebildete Aufbau des Drehkopfs auf eine Grundplatte aufgeschweißt. Am Rand der Grundplatte befindet sich ein Flanschring mit Bohrungen zum Einbringen von Schrauben als Verbindung zu einem drehbaren Lagerring des Drehlagers. Der Lagerbock des Drehkopfs hat üblicherweise eine ausgeprägte Tragstruktur in Längsrichtung des Auslegers, also in Wirkrichtung der Last. Der Durchmesser des Drehlagers ergibt sich aus dieser Last. In Querrichtung dazu wirken am Drehkopf geringere Lasten als in der Längsrichtung. Deshalb ist der Mastbock des Drehkopfs in Querrichtung deutlich schmaler als der Innendurchmesser des Drehlagers. Diese Bauweise widerspricht den Forderungen an die Verwendung eines kreisrunden Drehlagers, da dort die Lasten möglichst gleichmäßig über den gesamten Umfang ins Lager eingeleitet werden sollten. Ist dies nicht der Fall, sind Druckstellen und dadurch bedingte Schäden am Lager unvermeidlich. Es ist deshalb bereits vorgeschlagen worden, an der Oberseite der Grundplatte stützende Bleche anzubringen, die die Grundplatte rundum versteifen und die Last des Mastes möglichst homogen auf das Lager verteilen sollen. Diese Maßnahme ist zwar effektiv, benötigt aber viel Bauraum seitlich des Drehkopfs, der dort für die Unterbringung des beispielsweise als Knickmast ausgebildeten Arbeitsauslegers benötigt wird.

DE10 2008007917 A1 offenbart alle technischen Merkmale des Oberbegriffs des Anspruchs 1. Weiterhin offenbart GB 2417478 A einen Drehkopf eines Arbeitsgeräts, der als Verbindung zweier Auslegersegmente dient.

Ausgehend hiervon liegt der Erfindung die Aufgabe zugrunde, das bekannte Arbeitsgerät mit Drehkopf dahingehend zu verbessern, dass eine effektive Aussteifung der Grundplatte des Drehkopfs ohne Einbuße an Bauraum für die Unterbringung von Auslegerteilen gewährleistet ist.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen. Die erfindungsgemäße Lösung besteht im Wesentlichen darin, dass der Drehkopf eine von der Grundplatte aus in Richtung Unterbau weisende, vorzugsweise zum Lagerring konzentrische ringförmige Aussteifungsstruktur aufweist. Mit dieser Maßnahme wird erreicht, dass die Aussteifungsstruktur im montierten Zustand verdeckt in den Unterbau eingreift und keine äußeren Störkonturen aufweist.

Die Erfindung sieht vor, dass im Unterbau ein Lagerkessel angeordnet ist, an dessen Oberrand das mit dem Lagerring des Drehkopfs verbindbare Drehlager angeordnet ist und in welchen die Aussteifungsstruktur des Drehkopfs von oben her berührungslos eingreift. Der Lagerkessel bildet dabei einen zentralen Bestandteil des Unterbaus als Schnittstelle zwischen dem Arbeitsausleger und der Abstützvorrichtung, an welchem der Drehkopf des Arbeitsauslegers über das Drehlager angebracht ist. Der Lagerkessel ist also ein hochbelastetes Bauteil, das die Lasten des Arbeitsauslegers aufnimmt und an die Stützbeine weitergibt. Vorzugsweise ist die Aussteifungsstruktur konzentrisch zur Kesselwand angeordnet. Eine weitere Verbesserung der Aussteifungsfunktion kann dadurch erzielt werden, dass der Lagerbock mit seinen unteren Endabschnitten durch die Grundplatte hindurch in das Kesselinnere eingreift und von innen her an die Aussteifungsstruktur angeschweißt ist.

Eine weitere vorteilhafte Ausgestaltung der Erfindung sieht vor, dass der Lagerbock zwei spiegelsymmetrisch in seitlichem Abstand voneinander angeordnete, sich in der Längserstreckung des Auslegers über den Durchmesser der Grundplatte erstreckende Bockhälften aufweist. Die Bockhälften bestehen dabei zweckmäßig aus einem ebenen metallischen Flachmaterial, während die Aussteifungsstruktur aus einem gebogenen metallischen Flachmaterial besteht. Die Aussteifungsstruktur kann insbesondere die Gestalt eines Hohlzylinders oder eines hohlen Kegelstumpfs aufweisen.

In Anpassung an die sich über den Drehwinkel der Aussteifungsstruktur einstellenden Lastmomente weist der Hohlzylinder oder der Kegelstumpf der Aussteifungsstruktur zweckmäßig eine in Umfangsrichtung variable Wandhöhe auf. Dabei ist in Anpassung an die Lastverteilung über dem Lagerringumfang die Wandhöhe des Hohlzylinders im Bereich der Längserstreckung des Arbeitsauslegers höher als quer dazu.

Gemäß einer bevorzugten Ausgestaltung der Erfindung ist der Lagerring des Drehlagers motorisch antreibbar. Zu diesem Zweck weist der Lagerring vorteilhafterweise einen Zahnkranz auf, der mit mindestens einem motorisch angetriebenen Antriebsritzel kämmt.

Gemäß einer vorteilhaften Anwendung der Erfindung ist der Unterbau auf ein Gestell einer stationären oder mobilen Betonpumpe aufsetzbar, wobei der Arbeitsausleger als an dem Lagerbock des Drehkopfs um eine horizontale Achse schwenkbar angeordneter, mehrgliedriger Betonverteilermast ausgebildet ist.

Im Folgenden wird die Erfindung anhand der Zeichnung näher erläutert. Es zeigen
- Fig. 1a: und b eine Seitenansicht und eine Draufsicht einer Autobetonpumpe mit einem Verteilermast und einer Abstützvorrichtung;
- Fig. 2a: eine schaubildliche Explosionsdarstellung des Unterbaus der Autobetonpumpe mit Drehkopf;
- Fig. 2b: einen vergrößerten Ausschnitt aus Fig. 2a;
- Fig. 3a: und b eine schaubildliche Draufsicht und eine schaubildliche Untenansicht des Drehkopfs nach Fig. 2a mit Aussteifungsstruktur gemäß der Erfindung.

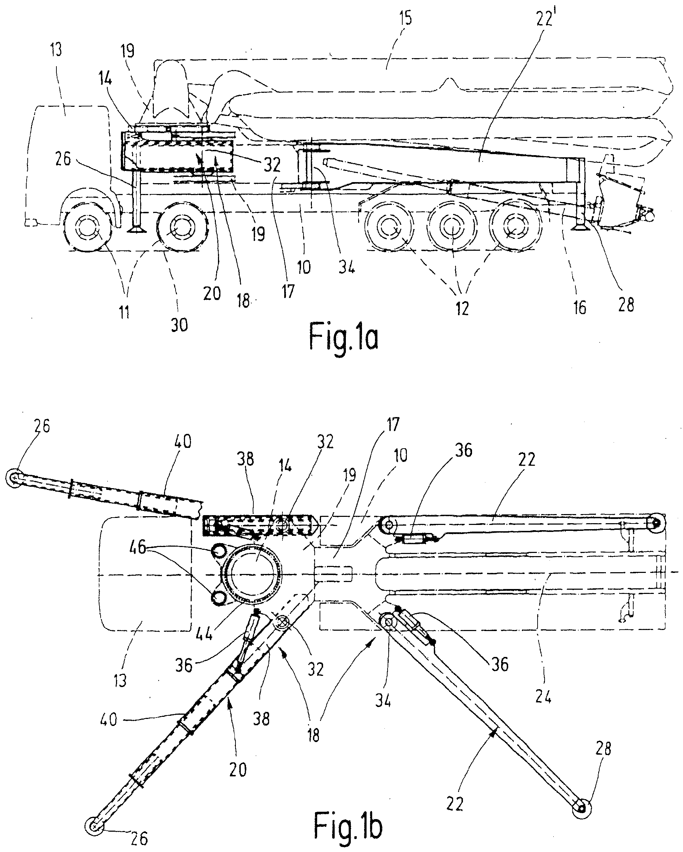

Die in Fig. 1 a und b gezeigte Autobetonpumpe besteht im Wesentlichen aus einem mehrachsigen Fahrgestell 10 mit zwei Vorderachsen 11 und drei Hinterachsen 12, mit einem Führerhaus 13, einem an einem Unterbau 14 mittels eines Drehkopfs 19 um eine vertikale Achse drehbar gelagerten, als Betonverteilermast ausgebildeten Arbeitsausleger 15, mit einer im Abstand vom Drehkopf auf dem Fahrgestell 10 montierten Pumpanordnung 16, sowie mit einer Abstützvorrichtung 18. Die Abstützvorrichtung 18 umfasst zwei vordere Stützbeine 20 und zwei rückwärtige Stützbeine 22,22', die am Unterbau angelenkt sind. Die Stützbeine sind in der Transportstellung eingezogen und parallel zur Fahrzeuglängsachse 24 ausgerichtet, während sie in der Abstützstellung schräg nach vorne bzw. hinten über das Fahrgestell überstehen und mit ihren Fußteilen 26,28 auf dem Untergrund 30 abgestützt sind. Die vorderen Stützbeine 20 und die rückwärtigen Stützbeine 22,22' sind dabei um ihre vertikalen Schwenkachsen 32,34 zwischen der Transportstellung und der Abstützstellung unter der Einwirkung je eines Ausstellzylinders 36 gegenüber dem Unterbau verschwenkbar. Zusätzlich sind die vorderen Stützbeine 20 als Teleskopausleger ausgebildet. Wie insbesondere aus Fig. 1 b zu ersehen ist, umfassen sie jeweils einen um die vertikale Schwenkachse 32 gegenüber dem Unterbau verschwenkbaren Auslegerkasten 38 und ein aus zwei Teleskoprohren bestehendes Teleskopteil 40.

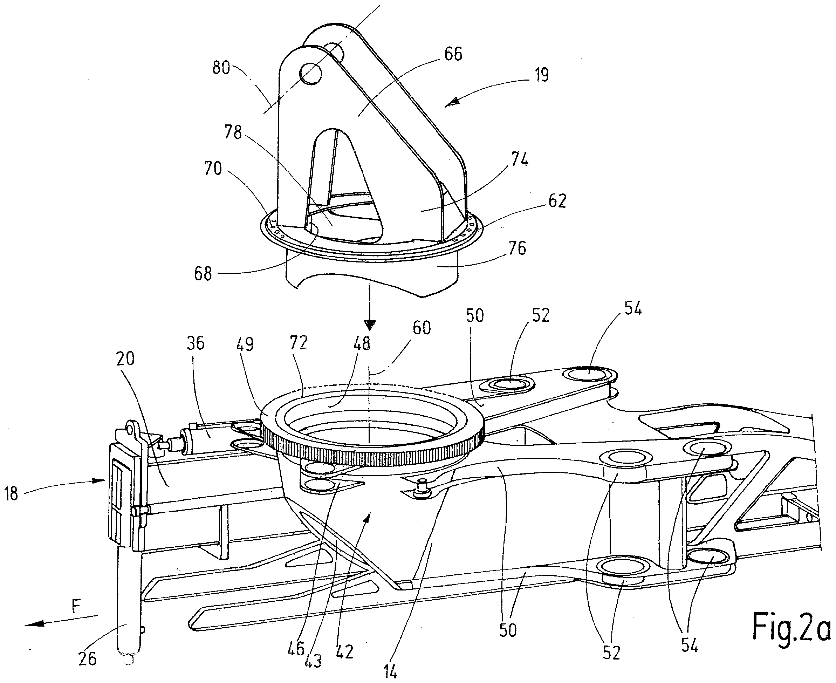

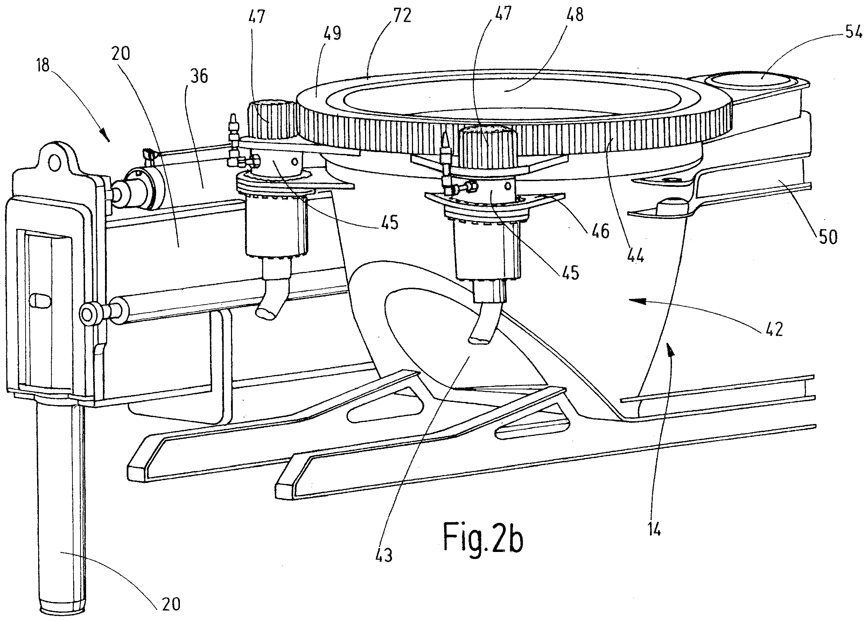

Zentraler Bestandteil des Unterbaus 14 ist der Lagerkessel 42, der die Schnittstelle zwischen dem Verteilermast 15 und der Abstützvorrichtung 18 bildet. Der Drehkopf 19 des Verteilermasts greift von oben her in den Lagerkessel 42 ein und ist am Lagerkessel 42 drehbar gelagert (vgl. Fig 2a). Der Antrieb erfolgt über einen am Lagerring des Drehlagers angeordneten Zahnkranz 44 mit Hilfe zweier hydraulischer oder elektrischer Antriebsmotoren 45, die mit einem Antriebsritzel 47 in den Zahnring eingreifen (vgl. Fig. 2b). Die Antriebsmotoren 45 sind an Laschen 46 des Lagerkessels 42 angeordnet. Der Lagerkessel 42 weist außerdem eine vertikale Durchgangsöffnung 43 für den Durchtritt einer nicht dargestellten Betonförderleitung auf. Der Lagerkessel 42 bildet ein Vertikallager für den am Drehkopf 19 angeordneten Arbeitsausleger 15 und nimmt die Belastung über seine Höhe auf. Wie aus Fig. 2a und b zu ersehen ist, sind hinter dem Lagerkessel 42 außerdem die zum Unterbau 14 gehörenden Lagerarme 50 angeschweißt, die im Abstand von der Kesselwand angeordnete Lageraugen 52,54 aufweisen, an denen jeweils eines der Stützbeine 20,22,22' um eine vertikale Achse schwenkbar gelagert ist. Aus Fig. 2a ist zu ersehen, dass der Drehkopf 19 mittels eines radial überstehenden Lagerrings 49 an einem Drehlager 48 des Unterbaus 14 um die Hochachse 60 drehbar gelagert ist. Der Lagerbock 66 des Drehkopfs 19 ist an einer mit einem zentralen Durchbruch 68 versehenen Grundplatte 64 angeordnet. Bei dem gezeigten Ausführungsbeispiel ist an der Grundplatte 64 außerdem ein Flanschring 62 angeformt, der mittels Schrauben durch die Schraubbohrungen 70 hindurch mit dem Lagerring 49 des Drehlagers 48 verbindbar ist. Der Lagerring 49 ist über ein Wälzlager 72 am Oberrand des Lagerkessels 42 gelagert und trägt an seinem Umfang den vorstehend beschriebenen Zahnkranz 44.

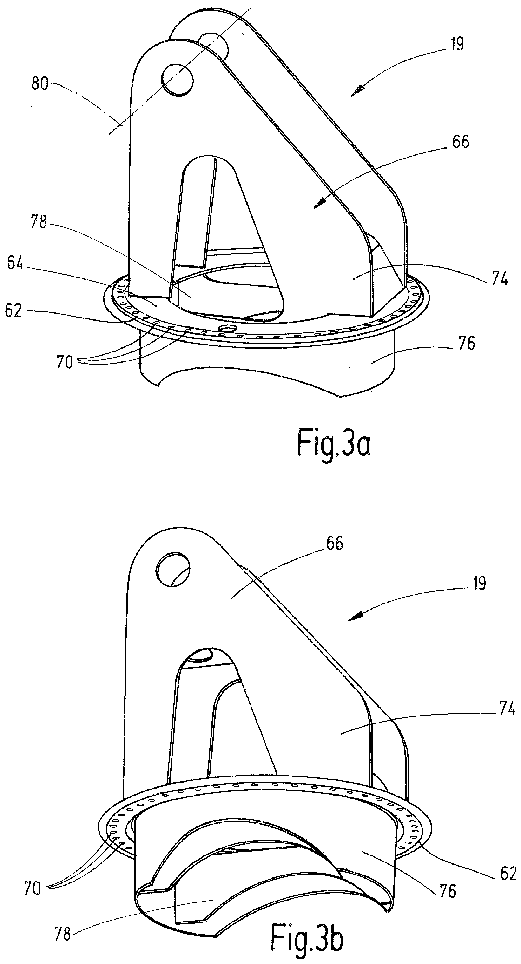

Wie aus Fig. 3a und b zu ersehen ist, weist der Lagerbock 66 eine nach Maßgabe der Ausrichtung des Arbeitsauslegers in dessen Längsrichtung eine verstärkte Tragstruktur 74 auf, die sich über den gesamten Innendurchmesser des Flanschrings 62 erstreckt. Quer dazu ist die Tragstruktur 74 schmaler ausgebildet. Um das Drehlager 48 in Umfangsrichtung gleichmäßig zu belasten, besteht eine Besonderheit der Erfindung darin, dass der Drehkopf 19 eine starr von der Grundplatte 64 aus in Richtung Unterbau 14 weisende, zum Lagerring 49 konzentrische Aussteifungsstruktur 76 aufweist. Im zusammengebauten Zustand greift der Drehkopf 19 mit seiner ringförmigen Aussteifungsstruktur 76 von oben her berührungslos in den Lagerkessel 42 ein (Fig. 2a). Demgemäß ist die Aussteifungsstruktur 76 auch konzentrisch zur Kesselwand angeordnet. Die Aussteifungsstruktur 76 ist ebenso wie der Lagerbock 66 an der Grundplatte 64 des Drehkopfs 19 angeschweißt. Sie hat die Gestalt eines Hohlzylinders oder eines hohlen Kegelstumpfs und kann in Umfangsrichtung in Anpassung an die Lastverteilung eine variable Wandhöhe aufweisen (Fig. 3a und b). Der Lagerbock 66 greift mit seinem unteren Endabschnitt 78 durch die Grundplatte 64 hindurch in das Kesselinnere ein und ist dort von innen her an die Aussteifungsstruktur 76 angeschweißt.

Zusammenfassend ist folgendes festzuhalten: Die Erfindung bezieht sich auf ein Arbeitsgerät mit einem Unterbau 14 zur Aufnahme einer Abstützvorrichtung 18 für die Bodenabstützung, und mit einem langgestreckten Arbeitsausleger. Der Arbeitsausleger ist mit seinem einen Ende an einem über den Unterbau 14 überstehenden Lagerbock 66 eines Drehkopfs 19 um eine Horizontalachse 80 schwenkbar gelagert. Außerdem ist der Drehkopf 19 mittels eines radial überstehenden Lagerrings 49 an einem Drehlager 48 des Unterbaus 14 um eine Hochachse 60 drehbar gelagert. Der Lagerbock 66 und der Lagerring 49 des Drehkopfs 19 sind über eine mit einem zentralen Durchbruch 68 versehene Grundplatte 64 starr miteinander verbunden. Eine Besonderheit der Erfindung besteht darin, dass der Drehkopf 19 eine von der Grundplatte 64 aus in Richtung Unterbau 14 weisende und zum Lagerring 49 konzentrische Aussteifungsstruktur 76 aufweist, welche die Unrundheit der Tragstruktur 74 des Lagerbocks 66 in Umfangsrichtung des Lagerrings ausgleicht.

### Bezugszeichenliste:

- 10: Fahrgestell
- 11: Vorderachsen
- 12: Hinterachsen
- 13: Führerhaus
- 14: Unterbau
- 15: Arbeitsausleger
- 16: Pumpanordnung
- 18: Abstützvorrichtung
- 19: Drehkopf
- 20: vordere Stützbeine
- 22,22': rückwärtige Stützbeine
- 24: Fahrzeuglängsachse
- 26,28: Fußteile
- 30: Untergrund
- 32,34: vertikale Schwenkachsen
- 36: Ausstellzylinder
- 38: Auslegerkasten
- 40: Teleskopteil
- 42: Lagerkessel
- 43: Durchgangsöffnung
- 44: Zahnkranz
- 45: Antriebsmotor
- 46: Lasche
- 47: Antriebsritzel
- 48: Drehlager
- 49: Lagerring
- 50: Lagerarme
- 52,54: Lageraugen
- 60: Hochachse
- 62: Flanschring
- 64: Grundplatte
- 66: Lagerbock
- 68: Durchbruch
- 70: Schraubbohrung
- 72: Wälzlager
- 74: Tragstruktur
- 76: Aussteifungsstruktur
- 78: unterer Endabschnitt (Lagerbock)
- 80: Horizontalachse

## Patentansprüche

1. Arbeitsgerät mit einem Unterbau (14), mit einer auf einem Untergrund abstützbaren Abstützvorrichtung (18) und mit einem langgestreckten Arbeitsausleger (15), wobei der Arbeitsausleger (15) mit seinem einen Ende an einem über den Unterbau (14) überstehenden Lagerbock (66) eines Drehkopfs (19) um eine Horizontalachse (80) schwenkbar gelagert ist, wobei der Drehkopf (19) mittels eines radial überstehenden Lagerrings (49) an einem Drehlager (48) des Unterbaus (14) um eine Hochachse (60) drehbar gelagert ist, **dadurch gekennzeichnet, dass** der Lagerbock (66) und der Lagerring (49) des Drehkopfs (19) über eine mit einem zentralen Durchbruch (68) versehene Grundplatte (64) starr miteinander verbunden sind, wobei der Lagerbock (66) eine in der Längsrichtung des Arbeitsauslegers (15) sich im Wesentlichen über den Innendurchmesser des Lagerrings (49) erstreckende und quer dazu schmalere Tragstruktur (74) bildet, wobei der Drehkopf (19) eine starr von der Grundplatte (64) aus in Richtung Unterbau (14) weisende Aussteifungsstruktur (76) aufweist, wobei im Unterbau (14) ein starr mit der Abstützvorrichtung (18) verbundener Lagerkessel (42) angeordnet ist, an dessen Oberrand das Drehlager (48) für den Drehkopf (19) angeordnet ist und in welchen die Aussteifungsstruktur (76) des Drehkopfs (19) von oben her berührungslos eingreift.

2. Arbeitsgerät nach Anspruch 1, **dadurch gekennzeichnet, dass** die Aussteifungsstruktur (76) ringförmig ausgebildet und konzentrisch zum Lagerring angeordnet ist.

3. Arbeitsgerät nach Anspruch 1 oder 2, **dadurch gekennzeichnet, dass** die Aussteifungsstruktur (76) ringförmig ausgebildet und konzentrisch zur Kesselwand angeordnet ist.

4. Arbeitsgerät nach einem der Ansprüche 1 bis 3, **dadurch gekennzeichnet, dass** der Lagerbock (66) und die Aussteifungsstruktur (76) an der Grundplatte (64) angeschweißt sind.

5. Arbeitsgerät nach einem der Ansprüche 1 bis 4, **dadurch gekennzeichnet, dass** der Drehkopf (19) mit einem an der Grundplatte (64) angeordneten, radial überstehenden Flanschring (62) am drehbaren Lagerring (49) des Drehlagers (48) lösbar fixiert ist.

6. Arbeitsgerät nach einem der Ansprüche 1 bis 5, **dadurch gekennzeichnet, dass** der Lagerbock (66) zwei spiegelsymmetrisch in seitlichem Abstand voneinander angeordnete, sich in der Längsrichtung des Arbeitsauslegers (15) über den Durchmesser der Grundplatte (64) erstreckende Bockhälften aufweist.

7. Arbeitsgerät nach Anspruch 6, **dadurch gekennzeichnet, dass** die Bockhälften aus einem ebenen metallischen Flachmaterial bestehen.

8. Arbeitsgerät nach einem der Ansprüche 1 bis 7, **dadurch gekennzeichnet, dass** die Aussteifungsstruktur (76) aus einem gebogenen metallischen Flachmaterial besteht.

9. Arbeitsgerät nach einem der Ansprüche 1 bis 8, **dadurch gekennzeichnet, dass** die Aussteifungsstruktur (76) die Gestalt eines Hohlzylinders oder eines hohlen Kegelstumpfs aufweist.

10. Arbeitsgerät nach Anspruch 9, **dadurch gekennzeichnet, dass** der Hohlzylinder oder der Kegelstumpf der Aussteifungsstruktur (76) eine in Umfangsrichtung variable Wandhöhe aufweist.

11. Arbeitsgerät nach einem der Ansprüche 1 bis 10, **dadurch gekennzeichnet, dass** der Lagerbock (66) mit seinem unteren Endabschnitt durch die Grundplatte (64) hindurch in das Kesselinnere eingreift und von innen her an die Aussteifungsstruktur (76) angeschweißt ist.

12. Arbeitsgerät nach einem der Ansprüche 1 bis 11, **dadurch gekennzeichnet, dass** der Lagerring (49) des Drehlagers (48) einen Zahnkranz (44) trägt, der mit mindestens einem motorisch angetriebenen Antriebsritzel (47) kämmt.

13. Arbeitsgerät nach einem der Ansprüche 1 bis 12, **dadurch gekennzeichnet, dass** der Unterbau (14) auf ein Gestell einer stationären oder mobilen Betonpumpe aufgesetzt ist, und dass der Arbeitsausleger (15) als an dem Lagerbock (66) des Drehkopfs (19) um eine horizontale Achse schwenkbar angeordneter, mehrgliedriger Betonverteilermast ausgebildet ist.

## Claims

1. A working device with a substructure (14), with a supporting device (18) which is supportable on an underlying surface and with an elongate working boom (15), wherein one end of the working boom (15) is mounted on a bearing block (66), which projects beyond the substructure (14), of a rotary head (19) so as to be pivotable about a horizontal axis (80), wherein the rotary head (19) is mounted on a rotary bearing (48) of the substructure (14) by means of a radially projecting bearing ring (49) so as to be rotatable about a vertical axis (60), **characterized in that** the bearing block (66) and the bearing ring (49) of the rotary head (19) are connected rigidly to each other via a baseplate (64) provided with a central aperture (68), wherein the bearing block (66) forms a support structure (74), which extends in the longitudinal direction of the working boom (15) substantially over the inside diameter of the bearing ring (49) and is narrower transversely with respect thereto, wherein the rotary head (19) has a reinforcing structure (76) pointing rigidly away from the baseplate (64) in direction to the substructure (14), wherein a bearing vessel (42) is arranged in the substructure (14) which bearing vessel (42) is rigidly connected to the supporting device (18) on the upper edge of which the rotary bearing (48) for the rotary head (19) is arranged and in which the reinforcing structure (76) of the rotary head (19) engages from above in a contactless manner.

2. The working device as claimed in claim 1, **characterized in that** the reinforcing structure (76) is of annular design and is arranged concentrically with respect to the bearing ring.

3. The working device as claimed in claim 1 or 2, **characterized in that** the reinforcing structure (76) is of annular design and is arranged concentrically with respect to the vessel wall.

4. The working device as claimed in one of claims 1 to 3, **characterized in that** the bearing block (66) and the reinforcing structure (76) are welded to the baseplate (64).

5. The working device as claimed in one of claims 1 to 4, **characterized in that** the rotary head (19) is secured releasably on the rotatable bearing ring (49) of the rotary bearing (48) by a radially projecting flange ring (62) arranged on the baseplate (64).

6. The working device as claimed in one of claims 1 to 5, **characterized in that** the bearing block (66) has two block halves which are arranged mirror-symmetrically at a lateral distance from each other and extend over the diameter of the baseplate (64) in the longitudinal direction of the working boom (15).

7. The working device as claimed in claim 6, **characterized in that** the block halves are composed of a two-dimensional, metallic flat material.

8. The working device as claimed in one of claims 1 to 7, **characterized in that** the reinforcing structure (76) is composed of a curved, metallic flat material.

9. The working device as claimed in one of claims 1 to 8, **characterized in that** the reinforcing structure (76) has the form of a hollow cylinder or a hollow truncated cone.

10. The working device as claimed in claim 9, **characterized in that** the hollow cylinder or the truncated cone of the reinforcing structure (76) has a wall height which is variable in the circumferential direction.

11. The working device as claimed in one of claims 1 to 10, **characterized in that** the bearing block (66) engages by means of the lower end portion thereof through the baseplate (64) into the vessel interior and is welded from the inside onto the reinforcing structure (76).

12. The working device as claimed in one of claims 1 to 11, **characterized in that** the bearing ring (49) of the rotary bearing (48) bears a toothed ring (44) which meshes with at least one motor-driven driving pinion (47).

13. The working device as claimed in one of claims 1 to 12, **characterized in that** the substructure (14) is placed onto a framework of a stationary or mobile concrete pump, and **in that** the working boom (15) is designed as a multi-section concrete distributing boom which is arranged on the bearing block (66) of the rotary head (19) so as to be pivotable about a horizontal axis.

## Revendications

1. Engin de travail comprenant une structure d'embase (14), un dispositif de soutien (18) pouvant prendre appui sur une structure sous-jacente et une flèche de travail (15) de forme allongée, ladite flèche de travail (15) étant montée à pivotement autour d'un axe horizontal (80), par l'une de ses extrémités, sur un palier de support (66) d'une tête rotative (19) qui est implanté en saillie au-dessus de la structure d'embase (14), ladite tête rotative (19) étant montée tournante autour d'un axe vertical (60) sur un palier de rotation (48) de ladite structure d'embase (14), au moyen d'un anneau d'appui (49) radialement en saillie, **caractérisé par le fait que** le palier de support (66) et l'anneau d'appui (49) de la tête rotative (19) sont reliés rigidement l'un à l'autre par l'intermédiaire d'une plaque de base (64) percée d'un évidement central (68), ledit palier de support (66) formant une structure porteuse (74) qui s'étend dans la direction longitudinale de la flèche de travail (15), couvre pour l'essentiel le diamètre intérieur dudit anneau d'appui (49) et est plus étroite dans le sens transversal, par rapport à ce dernier, ladite tête rotative (19) étant pourvue d'une structure de rigidification (76) pointant rigidement en direction de la structure d'embase (14) à partir de ladite plaque de base (64), ladite structure d'embase (14) renfermant un caisson de montage (42) qui est relié rigidement au dispositif de soutien (18), sur le bord supérieur duquel se trouve le palier de rotation (48) affecté à la tête rotative (19), et dans lequel la structure (76) de rigidification de ladite tête rotative (19) pénètre de haut en bas, avec absence de contact.

2. Engin de travail selon la revendication 1, **caractérisé par le fait que** la structure de rigidification (76) est de réalisation annulaire et est disposée concentriquement à l'anneau d'appui.

3. Engin de travail selon la revendication 1 ou 2, **caractérisé par le fait que** la structure de rigidification (76) est de réalisation annulaire et est disposée concentriquement à la paroi du caisson.

4. Engin de travail selon l'une des revendications 1 à 3, **caractérisé par le fait que** le palier de support (66) et la structure de rigidification (76) sont rapportés par soudage sur la plaque de base (64).

5. Engin de travail selon l'une des revendications 1 à 4, **caractérisé par le fait que** la tête rotative (19) est bloquée à demeure sur l'anneau rotatif d'appui (49) du palier de rotation (48), de manière libérable, par un anneau de bridage (62) situé sur la plaque de base (64) et faisant saillie dans le sens radial.

6. Engin de travail selon l'une des revendications 1 à 5, **caractérisé par le fait que** le palier de support (66) comprend deux moitiés agencées spéculairement avec espacement mutuel dans le sens latéral, qui s'étendent dans la direction longitudinale de la flèche de travail (15) en couvrant le diamètre de la plaque de base (64).

7. Engin de travail selon la revendication 6, **caractérisé par le fait que** les moitiés du palier sont constituées d'un matériau métallique aplati, de forme plane.

8. Engin de travail selon l'une des revendications 1 à 7, **caractérisé par le fait que** la structure de rigidification (76) est constituée d'un matériau métallique aplati, de forme cintrée.

9. Engin de travail selon l'une des revendications 1 à 8, **caractérisé par le fait que** la structure de rigidification (76) revêt la forme d'un cylindre creux ou d'un tronc de cône creux.

10. Engin de travail selon la revendication 9, **caractérisé par le fait que** le cylindre creux ou le tronc de cône de la structure de rigidification (76) présente une hauteur de paroi variable dans le sens périphérique.

11. Engin de travail selon l'une des revendications 1 à 10, **caractérisé par le fait que** le palier de support (66) pénètre dans l'espace interne du caisson de montage par sa région extrême inférieure, en traversant la plaque de base (64), et est rapporté par soudage sur la structure de rigidification (76), depuis l'intérieur.

12. Engin de travail selon l'une des revendications 1 à 11, **caractérisé par le fait que** l'anneau d'appui (49) du palier de rotation (48) porte une couronne dentée (44) en prise avec au moins un pignon menant (47) à entraînement motorisé.

13. Engin de travail selon l'une des revendications 1 à 12, **caractérisé par le fait que** la structure d'embase (14) est mise en place sur un châssis d'une pompe à béton fixe ou mobile ; et **par le fait que** la flèche de travail (15) est réalisée en tant que mât distributeur de béton composé de plusieurs parties et monté à pivotement, autour d'un axe horizontal, sur le palier de support (66) de la tête rotative (19).
